# EUROPÄISCHE PATENTANMELDUNG

(11) **EP 4 671 722 A1**
(43) Veröffentlichungstag der Anmeldung: **31.12.2025**
(21) Anmeldenummer: 25183540.1
(22) Anmeldetag: 18.06.2025
(51) Int. Cl.: G01M 9/06

(54) **VORRICHTUNG ZUR SICHTBARMACHUNG VON GASSTRÖMUNGEN IN EINEM RAUM, INSBESONDERE IN EINEM REINRAUM**

(30) Priorität: 24.06.2024 DE 102024117673
(71) Anmelder: Syntegon Technology GmbH, 70372 Stuttgart (DE)
(72) Erfinder: Eisenschmid, Ralph, 71672 Marbach (DE)
(74) Vertreter: Kreuels, Justus

(57) **Zusammenfassung**

Vorrichtung (1) zur Sichtbarmachung von Gasströmungen in einem Raum (2) aufweisend ein Sondenrohr (3), welches dazu eingerichtet ist sich in den Raum (2) hinein zu erstrecken, wobei das Sondenrohr (3) mindestens eine Austrittsöffnung (4) aufweist, über welche eine dosierte Zugabe eines Fluids zur Sichtbarmachung der Gasströmungen in den Raum (2) möglich ist, wobei in dem Sondenrohr (3) ein Versorgungskanal (5) zum Versorgen der mindestens einen Austrittsöffnung (4) mit Fluid angeordnet ist, wobei das Sondenrohr (3) ein abgeflachtes Querschnittsprofil (6) mit einer Anströmkante (7) und einer Abströmkante (8) aufweist und wobei die Austrittsöffnung (4) im Bereich der Abströmkante (8) an dem Sondenrohr (3) angeordnet ist, wobei das Sondenrohr (3) weiter eine Heizeinrichtung (9) aufweist, mit welcher zumindest der Versorgungskanal (5) beheizbar ist.

## Beschreibung

Die Erfindung betrifft ein Verfahren zur Sichtbarmachung von Gasströmungen in einem Raum, insbesondere in Reinräumen. Die Verwendung von Rauch bzw. Nebel zur Sichtbarmachung von Gasströmung ist eine gängige Methode, die insbesondere verwendet wird, um laminare Strömungen in Reinräumen zu identifizieren

Rauch oder Nebel werden zu diesem Zweck üblicherweise durch die Verbrennung von speziellen Rauchpatronen oder ggf. auch durch das Verdampfen von speziellen Flüssigkeiten oder Verwendung von Trockeneis erzeugt.

Rauch oder Nebel werden dann üblicherweise mit einer speziellen Vorrichtung umfassend ein Sondenrohr in den Bereich eingebracht, in welchem die Gasströmungen sichtbar gemacht werden sollen. Ein solches Sondenrohr hat üblicherweise Austrittsöffnungen, aus denen der Rauch bzw. der Nebel austreten kann. Der Rauch bzw. der Nebel bildet dann Fäden aus, die für einen Betrachter sichtbar sind. Anhand dieser Fäden kann der Verlauf von Gasströmungen in dem Raum nachvollzogen werden.

Häufig ist es erforderlich Gasströmungen durch einen Reinraum zu erkennen, um Prozesse, die in dem Reinraum durchgeführt werden zu optimieren. Verunreinigungen werden in Reinräumen häufig durch Gasströmungen verteilt. Die Kenntnis über in einem Reinraum auftretende Gasströmungen ist äußerst hilfreich, um den Betrieb des Reinraumes zu optimieren.

Es betrifft ein grundsätzliches Bedürfnis nach verbesserten Vorrichtungen und Verfahren zur Sichtbarmachung von Gasströmungen und insbesondere zur Sichtbarmachung von laminaren Gasströmungen in Reinräumen. Je besser es gelingt solche Gasströmungen sichtbar zu machen, umso besser können solche Gasströmungen verstanden werden und umso mehr können in Reinräumen durchgeführte Prozesse optimiert werden.

Hiervon ausgehend ist es Aufgabe der vorliegenden Erfindung, die mit Bezug auf den Stand der Technik geschilderten Probleme wenigstens teilweise zu lösen und insbesondere eine Vorrichtung anzugeben, mit der eine besonders präzise Sichtbarmachung von Gasströmungen in Reinräumen möglich ist.

Diese Aufgaben werden gelöst mit einer Vorrichtung und einem Verfahren gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann einzelne Merkmale in technologisch sinnvoller Weise miteinander kombinieren kann und damit zu weiteren Ausgestaltungen der Erfindung gelangt.

Die Erfindung betrifft eine Vorrichtung zur Sichtbarmachung von Gasströmungen in einem Raum aufweisend ein Sondenrohr, welches dazu eingerichtet ist sich in einen Raum hinein zu erstrecken, wobei, das Sondenrohr mindestens eine Austrittsöffnung aufweist, über welche eine dosierte Zugabe eines Fluids zur Sichtbarmachung der Gasströmungen in den Raum möglich ist, wobei in dem Sondenrohr ein Versorgungskanal zum Versorgen der mindestens einen Austrittsöffnung mit Fluid angeordnet ist, wobei das Sondenrohr ein abgeflachtes Querschnittsprofil mit einer Anströmkante und einer Abströmkante aufweist und wobei die Austrittsöffnung im Bereich der Abströmkante an dem Sondenrohr angeordnet ist, wobei das Sondenrohr weiter eine Heizeinrichtung aufweist, mit welcher zumindest der Versorgungskanal beheizbar ist.

Eine solche Vorrichtung kann insbesondere von einem Bediener per Hand bedient und in einen Raum eingebracht werden, in dem Gasströmungen untersucht werden sollen. Eine solche Vorrichtung kann insbesondere dazu verwendet werden, um in Reinräumen und/oder in Testräumen, in welchen Reinraumbedingungen in Reinräumen simuliert werden sollen, Gasströmungen sichtbar zu machen. In Reinräumen auftretende Gasströmungen sind häufig nicht zu vermeiden. Sie haben jedoch regelmäßig erhebliche Auswirkungen auf die Verteilung von Partikeln innerhalb des Reinraumes. Durch eine geeignete Auslegung von Anlagen in einem Reinraum ist es möglich die Auswirkung von Gasströmungen auf in einem Reinraum mit derartigen Anlagen betriebene Prozesse zu reduzieren. Solch ein Prozess kann beispielsweise das Abfüllen von pharmazeutischen Produkten mit einer Abfüllanlage sein. Unter Berücksichtigung von Erkenntnissen über in dem Reinraum auftretende Gasströmungen werden Stationen, an denen zu befüllende Behältnisse geöffnet sind, bspw. so angeordnet, dass Gasströmungen und insbesondere Gasströmungen mit einem turbulenten Strömungsverhalten nicht oberhalb dieser Stationen auftreten oder zumindest reduziert sind. Die hier behandelte Vorrichtung kann also dazu verwendet werden Gasströmungen zu untersuchen, um dann anhand der dadurch gewonnenen Erkenntnisse Anlagen in einem Reinraum zu designen.

Typische Geschwindigkeiten von Gasströmungen, die mit der hier beschriebenen Vorrichtung bzw. dem hier beschriebenen Sondenrohr untersucht werden können, liegen im Bereich zwischen 0.4 m/s [Meter pro Sekunde] und 2 m/s.

Als Fluid zur Sichtbarmachung wird bevorzugt ein gasförmiges Fluid verwendet, welches Bestandteile enthält, die auskondensieren können und so einen sichtbaren Nebel bilden. Auskondensierte Tröpfchen sind das, was an dem Fluid sichtbar ist. Das Fluid kann beispielsweise ein (gasförmiges) Glycerin-Wasser-Gemisch und oder (gasförmiges) reines Wasser oder (gasförmiges) Glykol sein. Das Fluid kann insbesondere auch ein Gemisch von Luft (und/oder reinem Stickstoff) und darin gelösten Flüssigkeiten wie Wasser oder Glykol sein. Bevorzugt kondensiert das Wasser und/oder das Glykol, wenn das Fluid aus den Austrittsöffnungen austritt. Dadurch bilden sich sichtbare Tröpfchen, mit denen die Gasströmung dann sichtbar gemacht wird. Zur Erzeugung von Fluid zur Sichtbarmachung können beispielsweise auch spezielle Rauchpatronen verbrannt werden. Es können auch Flüssigkeiten verdampft werden, die dann das Fluid zur Sichtbarmachung bilden. Auch die Verwendung von Trockeneis zur Bildung des Fluids zur Sichtbarmachung ist möglich.

Der Versorgungskanal ist insbesondere ein sich in dem Sondenrohr befindlicher Hohlraum, der mit der mindestens einen Austrittsöffnung verbunden ist und über den die mindestens eine Austrittsöffnung mit dem Fluid zur Sichtbarmachung versorgt wird. Ein Strömungswiederstand für das Fluid zur Sichtbarmachung in dem Versorgungskanal sowie eine Strömungsgeschwindigkeit des Fluids zur Sichtbarmachung in dem Versorgungskanal sind bevorzugt gering im Verhältnis zu einem Strömungswiderstand und einer Strömungsgeschwindigkeit des Fluids zur Sichtbarmachung im Bereich der mindestens einen Austrittsöffnung. So kann eine gleichmäßige Versorgung der mindestens einen Austrittsöffnung mit Fluid erreicht werden.

Eine abgeflachte Form des Querschnittsprofils verbessert die Umströmung des Querschnittsprofils durch die Gasströmung. Besonders bevorzugt hat das Sondenrohr eine stromlinienförmiges Querschnittsprofil mit einer abgerundeten Anströmkante und einer spitz zulaufenden Abströmkante. Bevorzugt liegt das Verhältnis der Länge zur Dicke des Querschnittsprofils im Bereich 4:1 bis 8:1. Die Länge des Querschnittprofils von der Anströmkante bis zur Abströmkante beträgt typischerweise zwischen 70 mm [Millimeter] und 130 mm, beispielsweise 1 mm. Die Dicke des Querschnittprofils beträgt beispielsweise zwischen 15 mm und 30 mm, beispielsweise ca. 22 mm. Die Form des Querschnittsprofils begünstigt bevorzugt, dass eine laminare Gasströmung, die das Sondenrohr umströmt und die mit dem Fluid sichtbar gemacht werden soll erhalten bleibt bzw. durch das Sondenrohr möglichst wenig beeinflusst wird. Ein derartiges geformtes Sondenrohr ermöglicht die besonders gleichmäßige Einbringung von Strömungsfäden des Fluids zur Sichtbarmachung in die Gasströmung (bspw. die Einbringung von Rauchfäden oder Nebelfäden).

Die Anordnung der Austrittsöffnungen für das Fluid zur Sichtbarmachung an der Abströmkante unterstützt die besonders gleichmäßige Einbringung von Strömungsfäden des Fluids zur Sichtbarmaching in die Gasströmung weiter.

Die Vorrichtung bzw. das Sondenrohr weisen eine Heizeinrichtung auf. Mit der Heizeinrichtung kann das Sondenrohr beheizt werden. Durch die Zufuhr von Wärme mit der Heizeinrichtung können insbesondere Abkühleffekte, die durch eine Druckminderung des Fluids zur Sichtbarmachung beim Austritt aus der Austrittsöffnung auftreten, reduziert werden. Insbesondere kann verhindert werden, dass an dem Sondenrohr sich Tropfen des Fluids zur Sichtbarmachung ausbilden. Fluid zur Sichtbarmachung, welches bereits an dem Sondenrohr kondensiert, kann durch die Zufuhr von Wärme mit der Heizeinrichtung verdampft werden. Ein Abtropfen von derartigen Tropfen von dem Sondenrohr kann verhindert werden. Durch die Heizeinrichtung wird insbesondere das Fluid zur Sichtbarmachung innerhalb des Versorgungskanals in dem Sondenrohr beheizt. Es hat sich heraus gestellt, dass die Beheizung des Fluids zur Sichtbarmachung in dem Versorgungskanal geeignet ist, um eine Bildung von Kondensat/Tropfen des Fluids zur Sichtbarmachung an den Austrittsöffnungen zu verhindern. Durch die Heizeinrichtung kann insbesondere auch vermieden werden, dass eine Kondensation des Fluids zur Sichtbarmachung bzw. von Bestandteilen des Fluids zur Sichtbarmachung bereits innerhalb des Sondenrohres (in dem Versorgungskanal) stattfindet.

Ein wesentlicher Vorteil der hier beschriebenen Vorrichtung wird durch die Kombination der Beheizbarkeit des Sondenrohres mit der abgeflachten Form des Querschnittsprofils erreicht.

Bisher gebräuchliche Sondenrohre (häufig auch Rauchrohre genannt) geben das Fluid zur Sichtbarmachung (üblicherweise Rauch) regelmäßig durch eine einzige kreisförmige Öffnung ab, die bspw. am Rohrende angeordnet ist. Der Nachteil hierbei ist, dass das Fluid zur Sichtbarmachung gewöhnlich mit einer viel zu hohen Geschwindigkeit austritt und somit die Laminarströmung im Raum negativ beeinflusst. Außerdem entspricht die Austrittsrichtung häufig nicht der Richtung der Gasströmung. Desweiteren tritt hierbei regelmäßig eine starke Drosselung des Fluids zur Sichtbarmachung auf. Dies führt dazu, dass kein schöner laminarer Rauchfaden ausgebildet wird, sondern instationäre Rauchballen bzw. Wölkchen.

Eine andere gebräuchliche Bauform ist ein etwa 3 - 5 cm dickes Rohr mit geschlossenem Ende, an dessen Mantel längs der Rohrachse mehrere Bohrungen bzw. Perforationen angebracht sind, an denen die einzelnen Rauchstränge austreten sollen. Hier ergibt sich der Nachteil, dass das Rohr von der zu untersuchenden Gasströmung quer angeströmt wird, und an der Unterseite des Rohrs bildet sich daher eine Strömungsablösung bzw. Verwirbelungen, welche die Gasströmung verändern.

Bei allen Rauchrohren, die mit verdampften Rauchfluiden arbeiten, können sich Pfützen oder Spritzer durch kondensiertes Rauchfluid im kälteren Rohr ausbilden. Dies kann durch die Heizeinrichtung verhindert werden.

Bevorzugt ist, wenn das Querschnittsprofil des Sondenrohrs nach Art eines vollsymmetrischen Flugzeugflügelprofils gestaltet ist.

Bevorzugt ist das Querschnittsprofil symmetrisch geformt wie ein Flugzeugflügelprofil eines Steuerruders und nicht wie ein Flugzeugflügelprofil eines Flügels, welcher einen Auftrieb erzeugen soll.

Außerdem bevorzugt ist, wenn die Abströmkante im Bereich der mindestens einen Austrittsöffnung durch ein Austrittsrohr unterbrochen ist, welches die Austrittsöffnung bildet und welches mit dem Versorgungskanal verbunden ist.

Die Abströmkante ist bevorzugt durch zwei in einem flachen Winkel (von bspw. weniger als 15 Winkelgrad aufeinander zulaufende Seitenoberflächen des Sondenrohrs gebildet. Die Achse von die Austrittsöffnungen bildenden Austrittsrohre schneidet bevorzugt diese Abströmkante. Die Austrittsrohre sind bevorzugt in Richtung der von der Anströmkante zu der Abströmkante des Sondenrohres ausgerichtet.

Darüber hinaus bevorzugt ist, wenn das Sondenrohr eine Mehrzahl von Austrittöffnungen aufweist, die über den Versorgungskanal mit Fluid versorgt werden.

Das Sondenrohr hat bevorzugt eine Mehrzahl von Austrittsöffnungen, die entlang des Sondenrohrs in einem festen Abstand zueinander angeordnet sind, so dass ausgehend von den Austrittsöffnungen eine gleichmäßige Anordnung von sichtbaren Fäden und/oder Spuren des Fluids zur Sichtbarmachung in der Gasströmung entsteht. Der Abstand der einzelnen Austrittsöffnungen beträgt bevorzugt zwischen 20 mm und 50 mm.

Weiter bevorzugt ist es, wenn innerhalb des Sondenrohres Verteilstrukturen angeordnet sind, die eine Vergleichmäßigung der Bereitstellung des Fluids an die Mehrzahl von Austrittsöffnungen unterstützen.

Verteilstrukturen können beispielsweise Strukturen innerhalb des Sondenrohres sein, die die Strömung des Fluids zur Sichtbarmachung in dem Versorgungskanal abbremsen und/oder verwirbeln. Solche Verteilstrukturen können zur gleichmäßigen Verteilung des Fluids zur Sichtbarmachung auf mehrere Austrittsöffnungen beitragen.

Besonders bevorzugt können derartige Verteilstrukturen auch Stützstrukturen sein. Das Sondenrohr ist bevorzugt (um einen geringen Querschnitt aufzuweisen) sehr dünnwandig ausgeführt. Aus diesem Grund ist es vorteilhaft, wenn innerhalb des Sondenrohres Stützstrukturen bzw. Versteifungsstrukturen angeordnet sind, die die Stabilität des Sondenrohres erhöhen, wobei gleichzeitig ein großes inneres Volumen des Sondenrohres erreicht wird.

Darüber hinaus bevorzugt ist, wenn die mindestens eine Austrittsöffnung zu dem Raum hin derart geformt ist, dass ein in dem Versorgungskanal vorliegender Druck, welcher gegenüber dem Druck in dem Raum erhöht ist, ausgeglichen wird und der Druck von an der mindestens einen Austrittsöffnung austretendem Fluid auf den Druck in dem Raum angepasst wird.

Bevorzugt wird das Fluid zur Sichtbarmachung mit einem gewissen Überdruck gegenüber dem Druck in dem Raum in den Versorgungskanal befördert. Dieser Überdruck dient dazu das Fluid zur Sichtbarmachung durch den Versorgungskanal und die Austrittsöffnungen zu fördern und das Fluid zur Sichtbarmachung an den Austrittsöffnungen bevorzugt auch so zu beschleunigen, dass die Geschwindigkeit des Fluids zur Sichtbarmachung an die Geschwindigkeit der Gasströmung angepasst ist, die sichtbar gemacht werden soll. Bevorzugt kann ein solcher Überdruck auch angepasst werden, um die Vorrichtung und die Bereitstellung des Fluids zur Sichtbarmachung genau an die jeweils zu untersuchende Gasströmung anzupassen.

Bei üblichen mit der beschriebenen Vorrichtung untersuchten Gasströmungen sind beispielsweise Überdrücke, mit denen das Fluid zur Sichtbarmachung in den Versorgungskanal gefördert wird, im Bereich zwischen 0,1 Pa und 0,3 Pa sinnvoll.

In diesem Zusammenhang kann insbesondere ein sogenannter isokinetischer Austritt des Fluids zur Sichtbarmachung aus den Austrittsöffnungen angestrebt sein. Der Druck und die Geschwindigkeit des Fluids zur Sichtbarmachung an den Austrittsöffnungen ist bevorzugt (möglichst) exakt an den Druck und die Geschwindigkeit der Gasströmung angepasst, die sichtbar gemacht werden soll.

Besonders bevorzugt ist eine Form der Austrittsöffnungen derart gestaltet, dass die Geschwindigkeit des Fluids an die Geschwindigkeit der sichtbar zu machenden Gasströmung in besonders vorteilhafter Weise angepasst wird. Bevorzugt verengt sich der Querschnitt von Austrittsöffnungen nach außen etwas, so dass das Fluid zur Sichtbarmachung beim Austritt aus den Austrittsöffnungen beschleunigt wird. Ein (eventuell vorhandener) Überdruck in dem Versorgungskanal kann dabei abgebaut werden.

Weiter bevorzugt ist, wenn das Sondenrohr mindestens eine Außenschicht aufweist, die aus einem elektrisch nicht leitenden Kunststoff hergestellt ist, wobei das Sondenrohr weiter mindestens eine Innenschicht aufweist, die den Versorgungskanal umgibt und aus einem elektrisch leitfähigen Kunststoff hergestellt ist und welche ein Heizelement der Heizeinrichtung bildet.

Bevorzugt kleidet diese Innenschicht bzw. der elektrisch leitfähige Kunststoff das Sondenrohr komplett aus. Bevorzugt ist der Versorgungskanal vollständig von dem elektrisch leitfähigen Kunststoff umgeben. In und/oder an dem elektrisch leitfähigen Kunststoff der Innenschicht sind bevorzugt Elektroden angeordnet, mit welchen elektrischer Strom in die Innenschicht einbringbar ist. Die Elektroden können beispielsweise Bahnen und/oder Drähte aus Kupfer sein, die in elektrisch leitfähiger Art- und Weise mit der Innenschicht aus elektrisch leitfähigem Kunststoff verbunden sein können.

Außerdem bevorzugt ist, wenn das Sondenrohr mit einem 3D-Druckverfahren hergestellt ist.

Besonders bevorzugt ist, wenn das Sondenrohr mit einem 3D-Druckverfahren hergestellt ist, mit welchem mindestens zwei verschiedene Kunststoffe verarbeitet werden können, wobei ein erster Kunststoff ein elektrisch nicht leitender Kunststoff ist und wobei ein zweiter Kunststoff ein elektrisch leitender Kunststoff ist.

Mit einem 3D-Druckverfahren lassen sich in besonders vorteilhafter Art auch Verteilstrukturen innerhalb des Sondenrohrs ausbilden, welche bevorzugt auch Stützstrukturen und/oder Versteifungsstrukturen des Sondenrohres bilden.

Weiter bevorzugt ist, wenn das Sondenrohr mindestens einen elektrischen Anschluss aufweist, an welchem die Heizeinrichtung mit einem elektrischen Strom beaufschlagt werden kann, um das Sondenrohr zu beheizen.

Der elektrische Anschluss ist bevorzugt als Kupferkabel ausgeführt, welches an Elektroden zur Bestromung des elektrisch leitfähigen Kunststoffmaterials angeschlossen ist.

Bevorzugt kann ein Strom, mit welchem die Heizeinrichtung bzw. das Heizelement bzw. das elektrisch leitfähige Kunststoffmaterial bestromt wird, angepasst werden, um die in das Sondenrohr eingebrachte Heizleistung zu regeln.

Besonders bevorzugt ist, wenn das Sondenrohr aus mindestens einem Sondenrohrelement gebildet ist, welches mit weiteren Sondenrohrelementen zusammensetzbar ist.

Außerdem bevorzugt ist, wenn das Sondenrohr mindestens ein Flanschelement aufweist, welches einen Griff hat und an welchem ein Versorgungsanschluss ausgebildet ist, mit welchem das Sondenrohr mit dem Fluid zur Sichtbarmachung versorgt werden kann.

Bevorzugt ist auch ein elektrischer Anschluss zur Versorgung der Heizeinrichtung des Sondenrohres mit elektrischem Strom an dem Flanschelement angeordnet.

Bevorzugt besteht die Vorrichtung bzw. das vollständige Sondenrohr aus dem Flanschelement mit dem Griff zur Bedienung der Vorrichtung durch einen Bediener, so wie mit den notwendigen Anschlüssen zur Versorgung des Sondenrohrs mit Fluid zur Sichtbarmachung bzw. mit elektrischem Strom zur Beheizung sowie aus mindestens einem Sondenrohrelement, so wie ggf. noch aus einem Endstück, mit welchem das Sondenrohr an dem dem Flanschelement gegenüberliegenden Ende verschlossen werden kann. Je nachdem welche Länge eines Sondenrohrs für die jeweilige mit dem Sondenrohr durchzuführende Untersuchung benötigt wird, können ein oder mehrere Sondenrohrelemente zusammen gesetzt sein, um das (komplette) Sondenrohr zu bilden.

Die Sondenrohrelemente haben bevorzugt an ihren beiden Enden jeweils Anschlussflansche, welche den Anschluss weiterer Sondenrohrelemente und/oder den Anschluss des Flanschelementes und/oder des Endstückes ermöglichen. Bevorzugt existieren an den Sondenrohrelementen bzw. den Anschlussflanschen der Sondenrohrelemente und an dem Flanschelement jeweils Konnektoren, mit welchen die Elektroden zur Bestromung des elektrisch leitfähigen Polymermaterials bzw. zur Bestromung des Heizelementes bzw. der Heizeinrichtung miteinander verbunden werden können, damit ein elektrischer Strom zur Versorgung der Heizeinrichtung über die Anschlussflansche von Sondenrohrelement zur Sondenrohrelement fließen kann. Bevorzugt sind die Anschlussflansche der Sondenrohrelemente darüber hinaus so ausgeführt, dass ein Versorgungskanal zur Versorgung der Austrittsöffnungen mit Fluid zur Sichtbarmachung über die Anschlussflansche zwischen den einzelnen Sondenrohrelementen verbunden wird.

Sondenrohrelemente haben beispielsweise eine Länge zwischen 150 mm und 350 mm, beispielsweise ca. 250 mm. Es können beispielsweise vier Sondenrohrelemente von dieser Länge zusammen gesteckt werden, um ein Sondenrohr mit einer Gesamtlänge von ca. 1 Meter zu bilden.

Hier auch beschrieben werden soll ein Verfahren zum Untersuchen einer Gasströmung in einem Raum mit einer beschriebenen Vorrichtung bzw. einem beschriebenen Sondenrohr aufweisend folgende Schritte:
a) Anordnen des Sondenrohrs in dem Raum derart, dass das abgeflachte Querschnittsprofil an der Gasströmung ausgerichtet ist;
b) Bereitstellen von Fluid zur Sichtbarmachung der Gasströmung durch die mindestens eine Austrittsöffnung des Sondenrohrs;
c) Anpassen eines Drucks des Fluids, um die Geschwindigkeit des aus der mindestens einen Austrittsöffnung austretenden Fluids an die Geschwindigkeit der Gasströmung anzupassen.

Es soll darauf hingewiesen werden, dass die im Zusammenhang mit der vorstehend beschriebenen Vorrichtung geschilderten besonderen Vorteile und Ausgestaltungsmerkmale auch für das im Folgenden beschriebene Verfahren anwendbar und übertragbar sind.

Die Erfindung sowie das technische Umfeld der Erfindung werden nachfolgend anhand der Figuren näher erläutert. Die Figuren zeigen ein bevorzugtes Ausführungsbeispiel, auf welche die Erfindung nicht beschränkt ist. Es ist darauf hinzuweisen, dass die Figuren und die in den Figuren dargestellten Größenverhältnisse nur schematisch sind. Es zeigen beispielhaft und schematisch:
Fig. 1: eine beschriebene Vorrichtung zur Sichtbarmachung von Gasströmungen;
Fig. 2: ein Sondenrohr einer beschriebenen Vorrichtung in einer dreidimensionalen Ansicht; und
Fig. 3: ein Querschnitt durch das Sondenrohr gemäß Fig. 2.

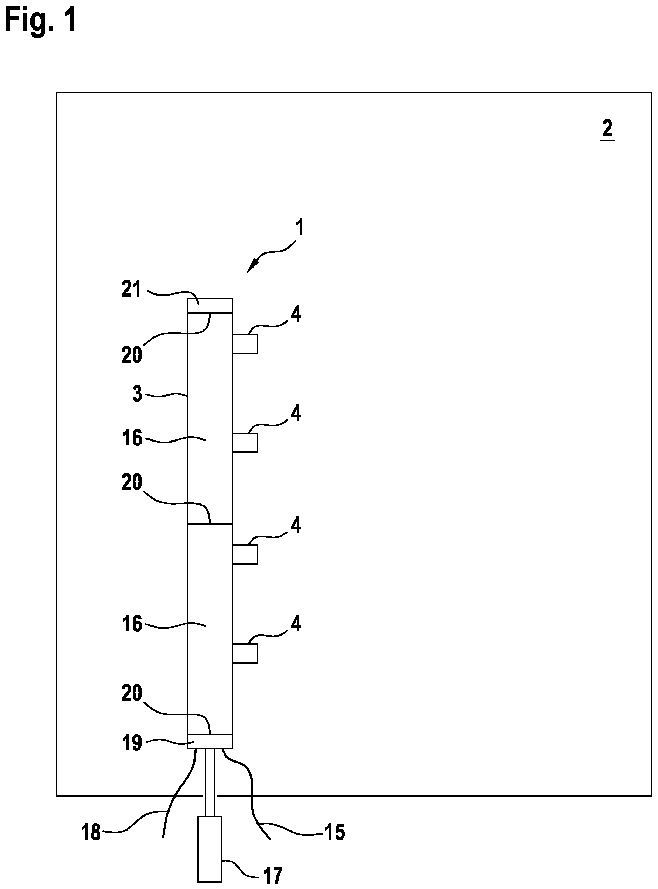

Die Fig. 1 zeigt die hier beschriebene Vorrichtung 1 zur Sichtbarmachung von Gasströmungen. Die Vorrichtung 1 umfasst ein Sondenrohr 3, welches in einem Raum 2 (bspw. einen Reinraum) eingebracht werden kann. Das Sondenrohr 3 hat Austrittsöffnungen 4, aus welchen ein gasförmiges Fluid zur Sichtbarmachung von Gasströmungen in den Raum 2 eingebracht werden kann. Die Austrittsöffnungen 4 sind hier schematisch angedeutet. Dieses gasförmige Fluid kann (wie weiter oben beschrieben) bspw. Nebel oder Rauch sein. Das Sondenrohr 3 ist bevorzugt (wie hier auch dargestellt) dazu ausgebildet von einem Bediener von Hand innerhalb des Raumes 2 bewegt werden zu können und bspw. so ausgerichtet werden zu können, dass ein Querschnittsprofil des Sondenrohrs 3 gemäß der Strömungsrichtung der Gasströmung in dem Raum 2 ausgerichtet ist. Dann erfolgt eine besonders gleichmäßige Einbringung des Fluids in den Raum 2 bzw. in die Gasströmung. Dafür kann das Sondenrohr 3 der Vorrichtung 1 einen Griff aufweisen, über welchen ein Bediener das Sondenrohr 3 bzw. die Vorrichtung 1 in dem Raum 2 halten und bewegen kann.

Bevorzugt ist das Sondenrohr 3 aus mehreren (bevorzugt baugleichen) Sondenrohrelementen 16 zusammengesetzt, die an ihren Enden jeweils zusammengesteckt werden können. So kann die Länge des Sondenrohrs 3 für den jeweiligen Anwendungsfall zur Sichtbarmachung einer Gasströmung angepasst werden. Bevorzugt umfasst die Vorrichtung 1 auch ein Flanschelement 19. Das Flanschelement 19 ist bevorzugt an ein Ende des Sondenrohrs 3 bzw. an ein Ende eines Sondenrohrelementes 16 angeschlossen. Bevorzugt ist der Griff 17 an diesem Flanschelement 19 ausgebildet. Bevorzugt weist das Flanschelement 19 weiter auch einen elektrischen Anschluss 15 auf, über welchen das Sondenrohr 3 mit elektrischer Energie zum Betrieb der darin angeordneten Heizeinrichtung versorgt werden kann. Bevorzugt weist das Flanschelement 19 darüber hinaus auch eine Fluidzuführung 18 auf, über welche das Fluid zur Sichtbarmachung von Gasströmungen in das Sondenrohr 3 eingebracht werden kann.

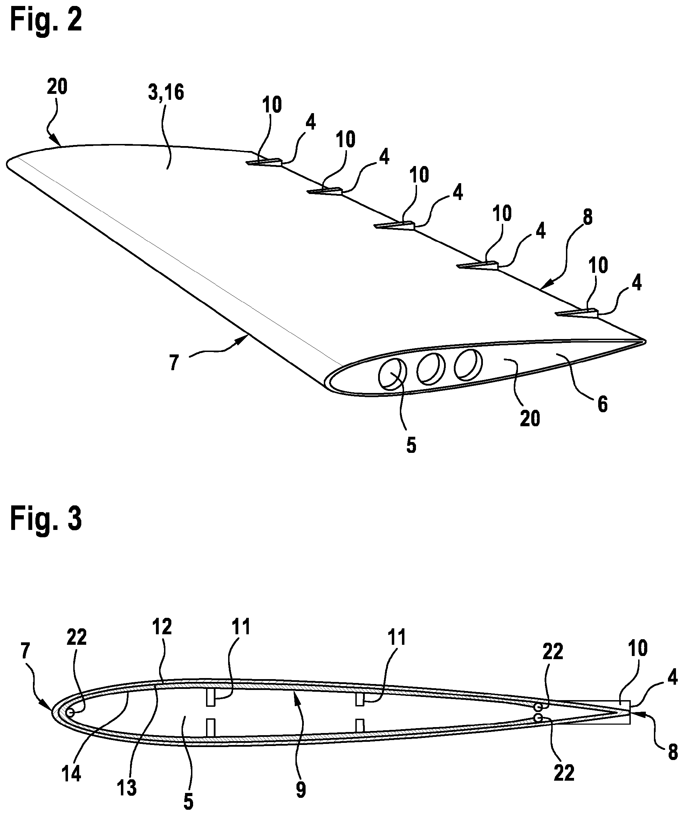

Die Fig. 2 zeigt das Sondenrohr 3 bzw. ein Sondenrohrelement 16, von welchem mehrere zu einem Sondenrohr 3 zusammen gesteckt werden können in einer dreidimensionalen Ansicht. Zu erkennen sind ein Sondenrohr 3 einer beschriebenen Vorrichtung 1 in einer dreidimensionalen Ansicht. Zu erkennen ist, dass das Sondenrohr 3 ein Querschnittsprofil 6 hat, welches stromlinienförmig gestaltet ist und welches an die Form eines Flugzeugflügelprofils angelehnt ist. Ein Sondenrohr 3 mit einem derartigen Querschnittsprofil 6 kann in einer Gasströmung in einem Raum derart ausgerichtet werden, dass der Einfluss des Sondenrohrs 3 selbst auf die Gasströmung gering bzw. ggf. sogar minimal ist. Das Querschnittsprofil 6 des Sondenrohrs 3 hat eine Anströmkante 7 und eine Abströmkante 8. Bevorzugt ist die Anströmkante 7 abgerundet ausgeführt, während die Abströmkante 8 spitz zuläuft. Eine derartige Form hat einen besonders geringen Strömungswiderstand für eine die Form umströmende Strömung. Das Sondenrohr 3 sorgt aufgrund seines Querschnittsprofils 6 für wenig Verwirbelungen und/oder Umformungen der Gasströmung. Mit den Sondenrohr 3 wird das Fluid zur Sichtbarmachung der Gasströmung bevorzugt derart in die Gasströmung eingebracht, dass die Gasströmung durch das Sondenrohr 3 bzw. die Einbringung möglichst wenig beeinflusst wird. Bevorzugt wird das Sondenrohr 3 derart in die Gasströmung eingebracht, dass die Richtung von der Anströmkante 7 zu der Abströmkante 8 der Richtung der Gasströmung entspricht.

Die Austrittsöffnungen 4 sind an der Abströmkante 8 angeordnet. Da die Abströmkante 8 (wie weiter oben schon beschrieben) spitz zuläuft und vor dem Hintergrund, dass die Austrittsöffnungen 4 einen ausreichenden Querschnitt zum Austritt des Fluids zur Sichtbarmachung aufweisen, ist die Abströmkante 8 bei den Austrittsöffnungen 4 bevorzugt erweitert und/oder unterbrochen. Besonders bevorzugt treten an der Abströmkante 8 Austrittsrohre 10 aus dem Sondenrohr 3 aus, die jeweils die Austrittsöffnungen 4 bilden.

In Fig. 2 ist auch zu sehen, dass das dort dargestellte Sondenrohrelement 16 Anschlussflansche 20 hat, an welchen es mit weiteren Sondenrohrelementen 16 und/oder (wie in Fig. 1 dargestellt) mit einem Endstück 21 oder einem Flanschelement 19 zusammengesteckt werden kann, um das vollständige Sondenrohr 3 bzw. die Vorrichtung 1 aufweisend ein Sondenrohr 3 zu bilden. Die Anschlussflansche 20 sind bevorzugt so ausgeführt, dass die Sondenrohrelemente 16 bzw. das Flanschelement 19 und/oder das Endstück 21 formschlüssig und stabil miteinander verbunden werden können. Hier zu sehen ist, dass das Sondenrohrelement 16 an dem Anschlussflansch 20 drei Öffnungen aufweist, wobei durch eine der drei Öffnungen ein Versorgungskanal 5 zur Versorgung der Austrittsöffnungen 4 mit dem Fluid zur Sichtbarmachung verläuft. Die anderen Öffnungen können bspw. dazu genutzt werden weitere Verbindungen zwischen den einzelnen Sondenrohrelementen 16 herzustellen - bspw. eine elektrische Verbindung zur Versorgung einer Heizeinrichtung 9 in dem Sondenrohr 3 bzw. in dem Sondenrohrelement 16 mit elektrischer Energie.

Die Fig. 3 zeigt einen Querschnitt durch das Sondenrohr 3 bzw. das Sondenrohrelement 16 gemäß Fig. 2. In Fig. 3 zu sehen ist, dass das Sondenrohr 3 zwischen der Anströmkante 7 und der Abströmkante 8 erweitert ist und einen Innenraum aufweist, der zumindest teilweise (ggf. vollständig) einen Versorgungskanal 5 bildet, durch welchen Fluid zur Sichtbarmachung den Austrittsöffnungen 4 zugeführt werden kann. In Fig. 3 ist auch nochmal deutlich zu erkennen, wie die Austrittsöffnungen 4 an der Abströmkante 8 mit Austrittsrohren 10 gebildet sind. Innerhalb des Innenraums des Sondenrohrs 3 bzw. Innerhalb des Versorgungskanals 5 können Verteilstrukturen 11 gebildet sein, die eine gleichmäßige Versorgung der Austrittsöffnungen 4 mit dem Fluid zur Sichtbarmachung bewirken können. Mit einer gleichmäßigen Versorgung ist hier insbesondere gemeint, dass bevorzugt an allen Austrittsöffnungen 4 des Sondenrohrs 3 gleich viel Fluid zur Sichtbarmachung und unter den gleichen Austrittsbedingungen (Austrittsgeschwindigkeit und Druck) austritt.

In Fig. 3 weiter zu erkennen ist, dass das Sondenrohr 3 bevorzugt einen mehrschichtigen Aufbau aufweist. Zu erkennen ist, dass das Sondenrohr 3 eine Außenschicht 12 aufweist, die bevorzugt aus einem formstabilen Kunststoff gebildet ist. Zu erkennen ist weiter, dass das Sondenrohr 4 eine Innenschicht 13 aufweist, die bevorzugt aus einem elektrisch leitfähigen Kunststoff gebildet ist und die eine Heizeinrichtung 9 bzw. ein Heizelement 14 einer Heizeinrichtung 9 ausbildet. Bevorzugt ist in den Innenraum des Sondenrohrs 3 an der Innenschicht 13 im Bereich der Anströmkante 7 eine mindestens erste Elektrode 22 angeschweißt. Besonders bevorzugt ist in dem Innenraum des Sondenrohrs 3 an der Innenschicht 13 im Bereich der Abströmkante 8 mindestens eine zweite Elektrode 22 angeschweißt. Bei der hier dargestellten Ausführungsvariante sind im Bereich der Abströmkante 8 zwei zweite Elektroden 22 angeschweißt, so dass zwischen den beiden zweiten Elektroden 22 das Fluid zur Sichtbarmachung noch von dem Versorgungskanal 5 zu den Austrittsöffnungen 4 überströmen kann. Eine Beheizung der Innenschicht 13 aus elektrisch leitfähigem Kunststoff kann dadurch erfolgen, dass zwischen ersten Elektroden 22 und zweiten Elektroden 22 ein elektrischer Strom angelegt wird. Die Anordnung von Elektroden 22 derart, dass erste Elektroden 22 in der Nähe der Anströmkante 7 und zweite Elektroden 22 in der Nähe der Abströmkante 8 ausgebildet sind, sowie eine Stromflussrichtung durch den elektrisch leitfähigen Kunststoff der Innenschicht 13 von der Anströmkante 7 zur Abströmkante 8 oder umgekehrt ist nur beispielhaft. Es sind auch andere Ausführungsvarianten denkbar, bei welchen die Durchströmung des elektrisch leitfähigen Kunststoffs der Innenschicht 13 bspw. von einem Anschlussflansch 20 zum nächsten Anschlussflansch 20 eines Sondenrohrelementes 16 erfolgt. Durch die (möglichst vollständige) Ausbildung einer Innenschicht 13 aus einem elektrisch leitfähigen Kunststoff bzw. als Heizelement 14 einer Heizeinrichtung 9 kann eine besonders gleichmäßige Beheizung des Sondenrohrs 3 erreicht werden. Die Abkühlung des Sondenrohrs 3 sowie die Bildung von Kondensat können so effektiv vermieden werden.

### Bezugszeichenliste

- 1: Vorrichtung
- 2: Raum
- 3: Sondenrohr
- 4: Austrittsöffnung
- 5: Versorgungskanal
- 6: Querschnittsprofil
- 7: Anströmkante
- 8: Abströmkante
- 9: Heizeinrichtung
- 10: Austrittsrohr
- 11: Verteilstruktur
- 12: Außenschicht
- 13: Innenschicht
- 14: Heizelement
- 15: elektrischer Anschluss
- 16: Sondenrohrelement
- 17: Griff
- 18: Fluidzuführung
- 19: Flanschelement
- 20: Anschlussflansch
- 21: Endstück
- 22: Elektrode

## Patentansprüche

1. Vorrichtung (1) zur Sichtbarmachung von Gasströmungen in einem Raum (2) aufweisend ein Sondenrohr (3), welches dazu eingerichtet ist sich in den Raum (2) hinein zu erstrecken, wobei das Sondenrohr (3) mindestens eine Austrittsöffnung (4) aufweist, über welche eine dosierte Zugabe eines Fluids zur Sichtbarmachung der Gasströmungen in den Raum (2) möglich ist, wobei in dem Sondenrohr (3) ein Versorgungskanal (5) zum Versorgen der mindestens einen Austrittsöffnung (4) mit Fluid angeordnet ist, wobei das Sondenrohr (3) ein abgeflachtes Querschnittsprofil (6) mit einer Anströmkante (7) und einer Abströmkante (8) aufweist und wobei die Austrittsöffnung (4) im Bereich der Abströmkante (8) an dem Sondenrohr (3) angeordnet ist, wobei das Sondenrohr (3) weiter eine Heizeinrichtung (9) aufweist, mit welcher zumindest der Versorgungskanal (5) beheizbar ist.

2. Vorrichtung (1) nach Anspruch 1, wobei das Querschnittsprofil (6) des Sondenrohrs (3) nach Art eines vollsymmetrischen Flugzeugflügelprofils gestaltet ist.

3. Vorrichtung (1) nach einem der vorhergehenden Ansprüche, wobei die Abströmkante (8) im Bereich der mindestens einen Austrittsöffnung (4) durch ein Austrittsrohr (10) unterbrochen ist, welches die Austrittsöffnung (4) bildet und welches mit dem Versorgungskanal (5) verbunden ist.

4. Vorrichtung (1) nach einem der vorhergehenden Ansprüche, wobei das Sondenrohr (3) eine Mehrzahl von Austrittöffnungen (4) aufweist, die über den Versorgungskanal (5) mit Fluid versorgt werden.

5. Vorrichtung (1) nach Anspruch 1, wobei innerhalb des Sondenrohres (3) Verteilstrukturen (11) angeordnet sind, die eine Vergleichmäßigung der Bereitstellung des Fluids an die Mehrzahl von Austrittsöffnungen (4) unterstützen.

6. Vorrichtung (1) nach einem der vorhergehenden Ansprüche, wobei mindestens eine Austrittsöffnung (4) zu dem Raum (2) hin derart geformt ist, dass ein in dem Versorgungskanal (5) vorliegender Druck, welcher gegenüber dem Druck in dem Raum (2) erhöht ist, ausgeglichen wird und der Druck und die Geschwindigkeit von an der mindestens einen Austrittsöffnung (4) austretendem Fluid auf den Druck und die Geschwindigkeit der Gasströmung in dem Raum (2) angepasst wird.

7. Vorrichtung (1) nach einem der vorhergehenden Ansprüche, wobei das Sondenrohr (3) mindestens eine Außenschicht (12) aufweist, die aus einem elektrisch nicht leitenden Kunststoff hergestellt ist, wobei das Sondenrohr (3) weiter mindestens eine Innenschicht (13) aufweist, die den Versorgungskanal (5) umgibt und aus einem elektrisch leitfähigen Kunststoff hergestellt ist und welche ein Heizelement (14) der Heizeinrichtung (9) bildet.

8. Vorrichtung (1) nach einem der vorhergehenden Ansprüche, wobei das Sondenrohr (3) mit einem 3D-Druckverfahren hergestellt ist.

9. Vorrichtung (1) nach Anspruch 8, wobei das Sondenrohr (3) mit einem 3D-Druckverfahren hergestellt ist, mit welchem mindestens zwei verschiedene Kunststoffe verarbeitet werden können, wobei ein erster Kunststoff ein elektrisch nicht leitender Kunststoff ist und wobei ein zweiter Kunststoff ein elektrisch leitender Kunststoff ist.

10. Vorrichtung (1) nach einem der vorhergehenden Ansprüche, wobei das Sondenrohr (3) mindestens einen elektrischen Anschluss (15) aufweist, an welchem die Heizeinrichtung (9) mit einem elektrischen Strom beaufschlagt werden kann, um das Sondenrohr (3) zu beheizen.

11. Vorrichtung (1) nach einem der vorhergehenden Ansprüche, wobei das Sondenrohr (3) aus mindestens einem Sondenrohrelement (16) gebildet ist, welches mit weiteren Sondenrohrelementen (16) zusammensetzbar ist.

12. Vorrichtung (1) nach einem der vorhergehenden Ansprüche, wobei das Sondenrohr (3) mindestens ein Flanschelement (19) aufweist, welches einen Griff (17) hat und an welchem ein Versorgungsanschluss ausgebildet ist mit welchem das Sondenrohr (3) mit dem Fluid zur Sichtbarmachung versorgt werden kann.

13. Verfahren zum Untersuchen einer Gasströmung in einem Raum mit einer Vorrichtung (1) gemäß einem der Ansprüche 1 bis 12 aufweisend folgende Schritte:
a) Anordnen des Sondenrohrs (3) in dem Raum derart, dass das abgeflachte Querschnittsprofil (6) an der Gasströmung ausgerichtet ist;
b) Bereitstellen von Fluid zur Sichtbarmachung der Gasströmung durch die mindestens eine Austrittsöffnung (4) des Sondenrohrs (3);
c) Anpassen eines Drucks des Fluids, um die Geschwindigkeit des aus der mindestens einen Austrittsöffnung (4) austretenden Fluids an die Geschwindigkeit der Gasströmung anzupassen.
